# FASCICULE DE BREVET EUROPEEN

(11) **EP 0 651 483 B1**
(45) Date de publication et mention de la délivrance du brevet: **17.09.1997**
(21) Numéro de dépôt: 94410096.5
(22) Date de dépôt: 25.10.1994
(51) Int. Cl.: H02B 1/42, H02B 1/32

(54) **Dispositif de fixation rapide d'un support dans un coffret d'appareillage électrique**
Schnellbefestigungsvorrichtung für einem Träger in einem Schaltschrank
Snap mounting means for a mounting element in a switchgear cabinet

(30) Priorité: 27.10.1993 FR 9312907
(43) Date de publication de la demande: 03.05.1995
(73) Titulaire: SCHNEIDER ELECTRIC SA, 92100 Boulogne Billancourt (FR)
(72) Inventeur: Pellicano, Joseph, F-38050 Grenoble Cedex 09 (FR); Buet, Jacques, F-38050 Grenoble Cedex 09 (FR); Canali, Pascal, F-38050 Grenoble Cedex 09 (FR)
(74) Mandataire: Ritzenthaler, Jacques

(56) Documents cités:
- EP-A- 0 017 124
- EP-A- 0 043 559
- EP-A- 0 492 754

## Description

La présente invention concerne de façon générale un dispositif de fixation rapide d'un support d'appareillage électrique dans un coffret électrique. Les supports d'appareillage électrique sont communément utilisés pour supporter un appareillage électrique dans un coffret, l'appareillage électrique étant généralement constitué par un certain nombre d'appareils électriques du type disjoncteur, interrupteur ou autre qui sont disposés côte-à-côte suivant une ou plusieurs rangées. L'appareillage électrique peut par exemple faire partie d'une installation électrique basse tension.

Généralement, un tel appareillage électrique est disposé dans un coffret qui comporte un fond, des parois latérales et une porte ou un panneau avant. Le coffret est généralement fixé verticalement contre un mur, c'est-à-dire que son fond est disposé verticalement. Les divers appareils électriques qui constituent l'appareillage électrique sont généralement fixés sur un ou plusieurs rails, chaque rail se présentant sous la forme d'un profilé rectiligne dont la forme en section transversale est normalisée, un tel rail étant généralement appelé rail DIN parce qu'il répond à une norme DIN. Chaque rail DIN est généralement disposé horizontalement et parallèlement au fond du coffret.

Il existe des coffrets dont le fond comporte en saillie des rails DIN qui font partie intégrante du coffret, le coffret étant alors réalisé en matière plastique ainsi que les rails DIN qui forme avec le coffret une seule pièce. Un tel coffret présente l'inconvénient que les rails sont en nombre déterminé et ne peuvent pas être déplacés par rapport au coffret ou ôtées de celui-ci.

Il existe aussi des coffrets dans lesquels des rails DIN sont montés de façon amovible sur le fond du coffret. Dans ce cas, le rail DIN comporte deux zones, généralement disposées au voisinage des deux extrémités du rail DIN qui sont adaptées pour assurer la fixation du rail DIN sur le fond du coffret ou sur une protubérance ménagée sur le fond du coffret ou sur une pièce intermédiaire elle-même fixée sur le fond du coffret. Un tel coffret présente l'inconvénient qu'on ne peut pas disposer côte-à-côte et de façon jointive les appareils électriques sur toute la longueur d'un rail DIN avant de fixer ce rail DIN sur le coffret parce que, dans ce cas, on n'a pas accès aux deux zones du rail DIN qui servent à sa fixation sur le coffret puisque ces zones sont masquées par des appareils électriques montés sur le rail DIN.

Il existe aussi des coffrets dans lesquels il est prévu plusieurs rails DIN réalisés en tôle et plusieurs montants réalisés en matière plastique. Chaque montant comporte une partie destinée à être fixée sur le fond du coffret. Des rails DIN en tôle sont fixés à demeure sur des montants pour constituer ensemble un ensemble rigide formant support commun appelé châssis pour un appareillage électrique, et ensuite, cet ensemble rigide est fixé sur le fond du coffret par l'intermédiaire des parties des montants destinées à être fixées sur le fond du coffret. Un tel coffret présente l'inconvénient que le montage de toutes les pièces qui le composent, c'est-à-dire d'un certain nombre de rails DIN en tôle et d'un autre nombre de montants en matière plastique est une opération relativement complexe à cause du nombre relativement grand de pièces différentes.

En outre, même si le rail DIN est fixé sur le fond du coffret d'une manière amovible ou démontable, il n'est pas possible de régler à volonté la distance entre le rail DIN et le fond du coffret.

Des exemples de réalisations selon l'art antérieur sont donnés dans les documents EP-A-0 492 754 et EP-A-0 017 124.

Un objet de l'invention consiste à proposer un coffret dans lequel peut être monté un certain nombre de rails DIN, de telle sorte que le montage des rails DIN dans le coffret soit simplifié et qu'il puisse permettre de régler à volonté la distance séparant le rail DIN du fond du coffret, entre une distance minimum et une distance maximum prédéterminées.

Un autre objet de l'invention consiste à proposer un coffret dans lequel peut être monté un certain nombre de rails DIN, de telle sorte que le montage des rails DIN dans le coffret soit simplifié.

Un autre objet de la présente invention consiste à proposer un tel coffret dans lequel il est possible de fixer côte-à-côte des appareils électriques sur toute la longueur de chaque rail DIN et de fixer ensuite l'ensemble des rails DIN et des appareils montés dessus sur le fond du coffret sans que les appareils montés sur les rails DIN ne constituent une gêne quelconque pour cette opération de fixation.

Selon une caractéristique essentielle de l'invention, on propose un coffret pour appareillage électrique comprenant :
. un fond plan ;
. un montant fixé de manière amovible sur le fond ; et

au moins un rail parallèle au fond, disposé sur le montant et destiné à recevoir l'appareillage électrique,
dans lequel ledit fond est muni d'au moins deux piliers disposés en saillie par rapport au fond et dirigés perpendiculairement au fond vers l'intérieur du coffret, ledit montant comporte au moins deux éléments de montage adaptés pour coopérer respectivement avec lesdits deux piliers, et un moyen de verrouillage rapide est prévu entre chaque élément de montage et le pilier correspondant.

Selon un mode de réalisation particulier de l'invention, les éléments de montage comportent au moins une partie creuse destinée à coulisser sur le pilier correspondant.

Selon un autre mode de réalisation de l'invention, ledit moyen de verrouillage rapide permet d'établir un verrouillage de l'élément de montage sur le pilier correspondant selon une position réglable le long du pilier, afin que la distance entre ledit élément de montage et ledit fond soit réglable.

Selon un autre mode de réalisation de l'invention, chaque moyen de verrouillage rapide comprend un crochet bistable qui est monté de façon coulissante dans ledit élément de montage selon une direction parallèle au fond et qui est adapté pour venir s'enficher dans des logements correspondants ménagés le long du pilier correspondant.

Selon un autre mode de réalisation, le pilieur comporte plusieurs éléments sécables, chaque élément sécable présentant un logement capable de recevoir un crochet bistable.

Selon un autre mode de réalisation de l'invention, chaque dit crochet bistable est disposé entre le rail et le fond et coulisse selon l'axe longitudinal du rail.

Ces objets, caractéristiques et avantages, ainsi que d'autres de la présente invention seront mieux compris lors de la description détaillée d'un exemple de réalisation qui va suivre, illustrée par les figures annexées parmi lesquelles :
La figure 1 est une vue en perspective d'un premier mode de réalisation du dispositif de support d'appareillage électrique selon l'invention ;
la figure 2 est une vue en perspective agrandie d'un pilier qui est un élément faisant partie du dispositif de support selon l'invention représenté sur la figure 1 ;
la figure 3 est une vue en perspective agrandie, vue prise depuis le dessous, d'un montant qui est un autre élément faisant partie du dispositif de support selon l'invention représenté sur la figure 1; et
les figures 4 et 5 sont des vues en perspective d'un second mode de réalisation du dispositif de support selon l'invention.

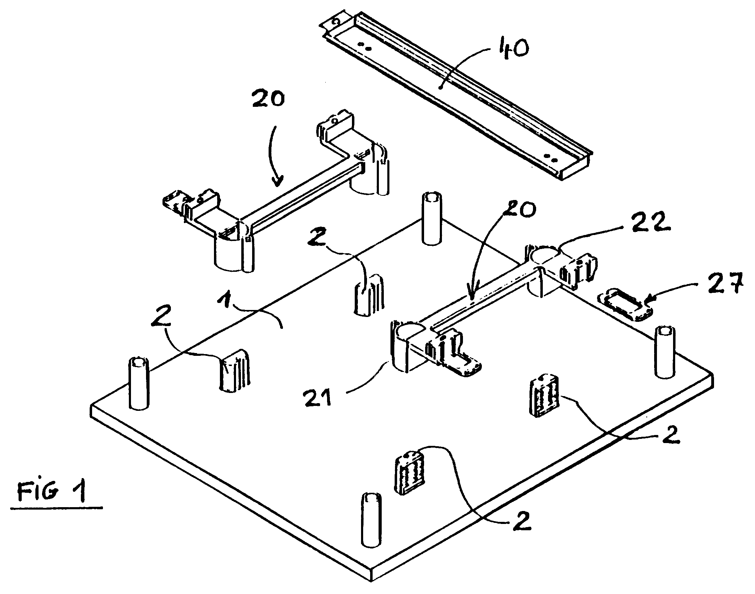

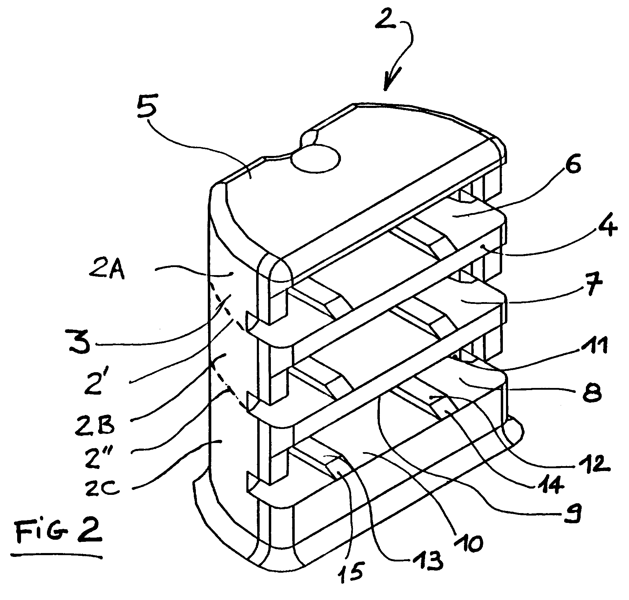

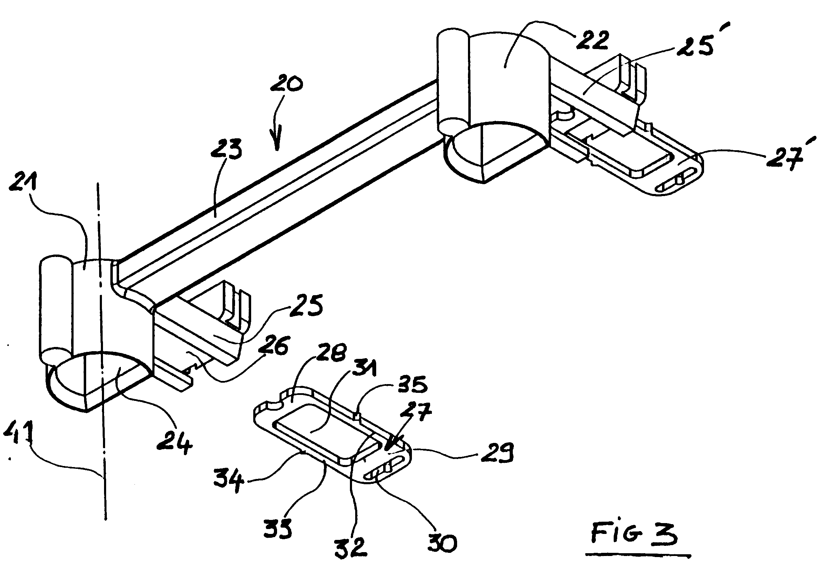

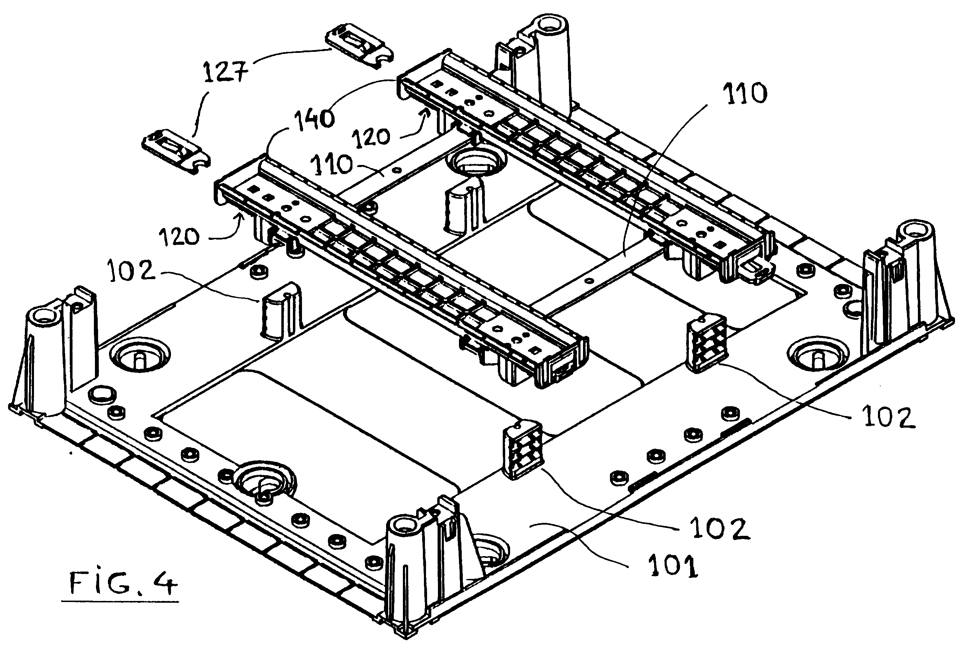

Sur la figure 1, on peut voir d'une façon générale l'ensemble des pièces qui constituent un premier mode de réalisation du dispositif de support d'appareillage électrique selon l'invention. On distingue un fond 1 d'un coffret dont les autres parties, par exemple des parois latérales, ne sont pas représentées ici par mesure de simplification. Le fond 1 du coffret peut se présenter d'une façon générale sous la forme d'une plaque plane.

Habituellement, le coffret est fixé sur un mur vertical, ce qui fait que son fond est disposé verticalement, mais sur les figures 1 à 3, on a représenté le fond du coffret disposé horizontalement. Par conséquent, par simple commodité de description, on parlera dans la suite du texte des orientations verticales et horizontales, des directions vers le haut et vers le bas ou des positions supérieures et inférieures par rapport à cette position horizontale arbitraire du fond 1, sans que cela ne constitue une quelconque limitation de la portée de l'invention.

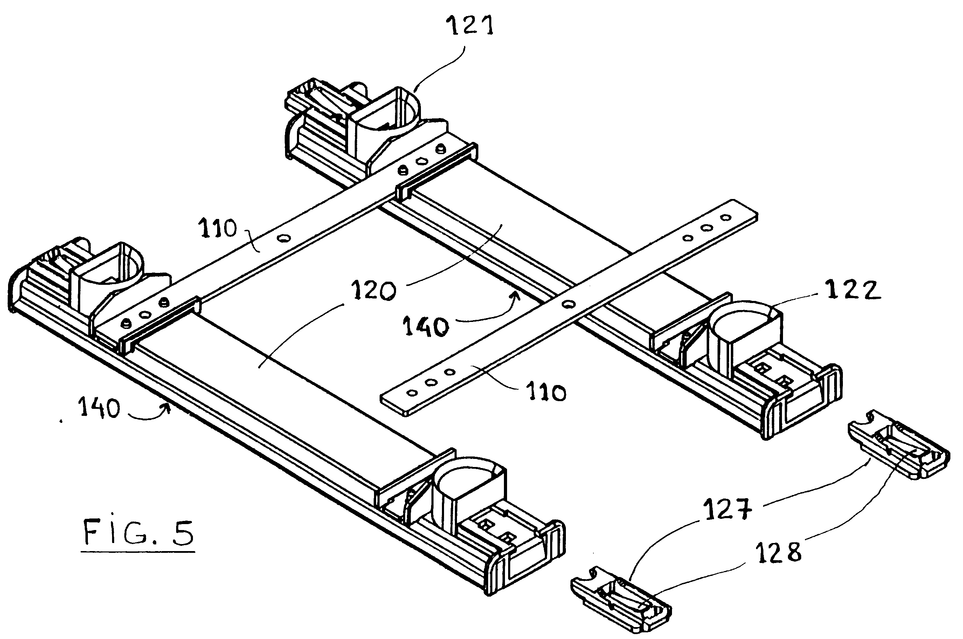

Sur la paroi supérieure du fond 1 du coffret, c'est-à-dire sur la paroi interne du coffret, sont disposés un certain nombre de piliers 2, soit quatre piliers 2 dans l'exemple représenté sur la figure 1. Chaque pilier 2 présente une forme d'un demi-cylindre dont l'axe longitudinal est perpendiculaire au fond 1. Autrement dit, le pilier 2 a une forme qui correspond à une pièce cylindrique comprenant un méplat longitudinal. La section en coupe transversale du pilier 2, c'est-à-dire la section prise suivant une coupe perpendiculaire à l'axe longitudinal du cylindre formant le pilier 2, est constante sur toute la longueur utile du pilier 2. Comme on peut le voir plus en détail sur la figure 2, le pilier 2 comporte donc une surface externe cylindrique 3 et une surface plane 4 qui correspondent au méplat longitudinal défini précédemment. Dans l'exemple de réalisation représenté en détail sur la figure 2, il est en outre prévu un méplat secondaire longitudinal 5 qui est disposé à l'opposé par rapport au méplat 4 et qui est d'une dimension plus faible. La "forme semi-circulaire" décrite précédemment fait abstraction de ce méplat secondaire 5. Le pilier 2 comporte en outre un certain nombre de logements identiques 6, 7, 8. Chaque logement 6, 7, 8 est un évidemement ménagé dans le pilier 2 de façon à déboucher au niveau du méplat 4. Le logement 6, 7, 8 est limité vers le haut par une première surface plane 9 (dont seulement un bord extérieur est visible sur la figure 2), est limité vers le bas par une seconde surface plane horizontale 10 et est limité latéralement par une surface sensiblement cylindrique concave verticale 11. En outre, deux nervures horizontales 12, 13 sont disposées parallèlement entre elles, perpendiculairement au méplat 4 et parallèlement et en protubérance par rapport à la surface plane inférieure 10 du logement 6, 7, 8. Chaque nervure 12, 13 présente une hauteur nettement inférieure à l'épaisseur du logement 6, 7, 8, c'est-à-dire à la distance qui sépare la surface plane supérieure 9 et la surface plane inférieure 10 du logement 6, 7, 8. Chaque nervure 12, 13 comporte en outre un chanfrein 14, 15 qui est ménagé au voisinage du méplat 4 et qui est incliné vers l'extérieur et vers le bas de façon à constituer une surface permettant de faciliter l'introduction dans le logement d'un "crochet bistable" (qui sera décrit par la suite).

Sur la figure 1, on voit encore que le coffret selon l'invention comprend en outre un montant 20 qui peut être fixé de façon amovible aux piliers 2. Comme on peut le voir plus en détail sur la figure 3, le montant 20 comprend deux éléments de montage 21, 22 qui sont adaptés pour coopérer respectivement avec deux des piliers 2. Les deux éléments de montage 21 et 22 sont reliés rigidement par une liaison 23 qui s'étend longitudinalement depuis un élément de montage 21 jusqu'à l'autre élément de montage 22. Chaque élément de montage 21, 22 présente un évidement 24 dont la forme interne correspond sensiblement à la forme externe du pilier 2. L'élément de montage 21, 22 est destiné à venir s'emboîter sur un pilier 2 correspondant, et par conséquent, le pilier 2 est destiné à venir s'enfiler à l'intérieur de l'évidement 24 de l'élément de montage. Pour cette raison, les dimensions internes de l'évidement 24 sont très légèrement supérieures aux dimensions externes correspondantes du pilier 2 de telle sorte qu'il y ait un léger jeu entre le pilier 2 et l'élément de montage 21, 22 lorsque ces deux pièces sont emboîtées l'une sur l'autre.

Sur une partie latérale de chaque élément de montage 21, 22, est prévu respectivement un support de crochet 25, 25'. Chaque support de crochet 25, 25' comporte un logement en forme de glissière 26 qui s'étend perpendiculairement à l'axe longitudinal de la partie cylindrique qui forme la paroi interne de l'évidement 24, cet axe longitudinal 41 étant sensiblement confondu avec l'axe longitudinal de la partie cylindrique qui forme la surface externe du pilier 2). Le logement en forme de glissière 26 débouche à l'intérieur de l'évidement 24. Un crochet bistable 27 est prévu pour venir s'emboîter dans le logement 26 en pouvant coulisser longitudinalement dans ce logement 26 de façon à pouvoir prendre deux positions stables, une première position dans laquelle le crochet bistable 27 est logé dans le logement 26 sans déboucher à l'intérieur de l'évidement 24 et une seconde position stable dans laquelle le crochet 27 comprend une partie d'extrémité 28 qui débouche à l'intérieur de l'évidement 24. Sur la figure 3, on a représenté un premier crochet bistable 27 complètement à l'extérieur du logement en forme de glissière 26 du support 25 et on a représenté un autre crochet bistable 27' dans une position dans laquelle il commence à être enfilé dans le logement en forme de glissière 26 du support 25 en vue de prendre la première position stable dans laquelle son extrémité 28 ne débouche pas à l'intérieur de l'évidement 24.

De préférence, tous les crochets 27, 27' sont identiques et sont constitués de façon générale par une plaque plane rectangulaire comportant une extrémité longitudinale 28 qui est destinée à venir déboucher dans l'évidement 24, une autre extrémité opposée 29 qui comporte un trou ou une fente 30 permettant la préhension, par exemple à l'aide d'un tournevis, du crochet bistable 27 en vue de son actionnement pour l'amener dans l'une de ses deux positions stables, et une fenêtre rectangulaire 31 qui est en position centrale et qui permet d'obtenir deux bras latéraux 32, 33 relativement minces et par conséquent relativement souples sur lesquels sont ménagées deux protubérances 34, 35 qui sont destinées à venir se loger élastiquement dans des évidements correspondants (non représentés) prévus dans le logement en forme de glissière 26 afin d'immobiliser de façon stable le crochet bistable dans l'une et l'autre de ses deux positions stables.

Le coffret selon la présente invention fonctionne de la façon suivante. Un montant 20 est présenté devant le fond 1 du coffret de telle sorte que ses deux éléments de montage 21, 22 viennent en face de deux piliers correspondants 2. Bien entendu, l'écartement entre les deux éléments de montage 21, 22 est égal à l'écartement entre les deux piliers correspondants 2. Ensuite, la personne qui effectue ce montage rapproche le montant 20 du fond 1 de façon à ce que les deux piliers 2 s'engagent simultanément dans les évidements 24 des deux éléments de montage 21, 22. Cette personne peut positionner ainsi le montant 20 à une certaine distance de son choix par rapport au fond 1 du coffret en actionnant les crochets bistables 27 qui sont logés respectivement au niveau des éléments de montage 21 et 22 de façon à leur faire prendre la position stable dans laquelle leur extrémité 28 vient déboucher à l'intérieur de l'évidement 24 de façon à ce que cette extrémité 28 vienne s'engager dans l'un au choix des logements 6, 7, 8 ménagés dans chaque pilier 2. La personne peut par exemple utiliser un tournevis ou un tout autre outil similaire pour l'engager dans le trou 30 de chaque crochet bistable 27, 27' afin de pouvoir facilement déplacer ce crochet bistable pour l'amener d'une position stable à l'autre. Le démontage peut s'effectuer d'une façon inverse en actionnant les crochets bistables 27, 27' de façon à les retirer vers l'extérieur pour les amener dans la position stable dans laquelle leur extrémité 28 ne débouche pas à l'intérieur de l'évidement 24. Dans cette position l'élément de montage 20 peut être librement séparé du fond 1.

Selon une variante illustrée à la figure 2, le pilier 2 comprend des éléments sécables 2A, 2B et 2C selon des lignes 2' et 2'', et respectivement associés aux logements 6, 7 et 8. En d'autres termes, pour régler la distance du rail 40 par rapport au fond 1, on peut casser le pilier 2 suivant l'une ou l'autre des lignes 2' ou 2'', de manière à sélectionner le logement 7 ou 8 dans lequel on enfichera le crochet 27.

On peut utiliser un tel dispositif de montage dans un tel coffret selon l'invention, par exemple, en ménageant quatre piliers 2 aux quatre coins d'un rectangle et en amenant respectivement deux montants 20 sur deux paires opposées de piliers 2, puis en fixant un ou plusieurs rails DIN sur les deux montants 20.

De préférence, un rail DIN 40 est agencé de façon à ce que l'une de ses extrémités vienne se fixer sur un élément de montage d'un des montant 20 et que son autre extrémité vienne se fixer sur un élément de montage correspondant d'un autre montant 20 monté parallèlement au premier montant 20.

Cet agencement général d'un coffret selon la présente invention permet en outre de pouvoir commencer par fixer, par exemple, deux rails DIN parallèles 40 sur deux montants 20 parallèles de façon à constituer un châssis rigide, puis à fixer sur les deux rails DIN 40 un certain nombre d'appareils électriques, puis à effectuer des câblages arrière entre ces différents appareils électriques, puis enfin à amener le cadre monobloc ainsi constitué par deux rails DIN 40 et par deux montants 20 au-dessus du fond 1 du coffret de telle sorte que les quatre éléments de montage 21, 22 de cet ensemble (deux éléments de montage 21, 22 pour le premier montant 20 et deux éléments de montage 21, 22 pour le second montant 20) viennent s'emboîter respectivement sur quatre piliers 2 correspondants. La personne qui effectue ce montage peut alors facilement choisir la distance à laquelle elle souhaite fixer les montant 20 par rapport au fond 1, puis effectuer cette fixation des montants 20 sur les piliers 2 du fond 1 sans être gênée par la présence de tous les appareils électriques déjà montés sur les deux rails DIN 40 puisque la personne peut toujours avoir accès à l'extrémité externe 29 des crochets bistables 27, ces extrémités 29 débordant naturellement de la position extrême à laquelle peut être fixé un appareil électrique au niveau d'une extrémité d'un rail DIN 40.

Par conséquent, le volume total pouvant être occupé par des appareils électriques montés sur des rails DIN 40 est rendu maximum pour une dimension donnée de coffret, et en outre le montage de l'ensemble est facilité à la fois par le fait que l'on peut pré-monter des appareils électriques sur un ensemble rigide constitué au moins par deux rails DIN 40 et par deux montant 20 et aussi par le fait que cet ensemble rigide peut ensuite être fixé sur le fond 1 du coffret à une distance choisie librement entre une distance minimum et une distance maximum prédéterminées.

Bien entendu, dans l'exemple de réalisation présenté ici, cet exemple n'étant pas limitatif, la possibilité de choix de la distance entre les montant 20 et le fond 1 est limitée à trois distances possibles qui correspondent respectivement à l'engagement de l'extrémité 28 du crochet bistable 27 soit dans le logement 6 (position du montant 20 la plus éloignée du fond 1), soit dans le logement 7 (position intermédiaire), soit dans le logement 8 (position la plus raprochée). Si le pilier 2 comporte plus de trois logements 6, 7, 8, la personne qui effectue le montage a alors un plus grand nombre de choix possibles pour le réglage de la distance entre le montant et le fond. D'autres agencements particuliers d'un pilier 2, d'un élément de montage 21, 22 et d'un crochet bistable 27 peuvent être envisagés, sans sortir du cadre de l'invention, pour faire en sorte que la fixation entre un montant 20 et un fond 1 puisse être effectuée de façon à ce que la distance entre le montant 20 et le fond 1 soit réglable à l'infini, c'est-à-dire sans incrément, entre une distance maximum et une distance minimum prédéterminées.

De préférence, le fond 1 et les piliers 2 forment un ensemble monobloc réalisé en une seule pièce en matière plastique moulée.

De préférence, au moins un montant 20 et au moins un rail DIN 40 forment un ensemble monobloc réalisé en une seule pièce en matière plastique moulée. Dans certains cas, deux montants 20 et deux rails DIN 40 forment un ensemble monobloc en forme de châssis réalisé en une seule pièce en matière plastique moulée. Dans d'autre cas, deux ou plus de deux montants 20 et plus de deux rails DIN 40 forment un ensemble monobloc en forme de grille réalisé en une seule pièce en matière plastique moulée.

De préférence le rail DIN 40 dépasse de part et d'autre des éléments de montage 21 et 22, laissant ainsi deux couloirs latéraux verticaux destinés à faciliter le cablage de l'appareillage électrique. On notera que toute la longueur du rail 40 peut recevoir de l'appareillage et que si ce rail 40 est équipé sur toute sa longueur d'appareils électriques, l'ensemble rail 40 et montant 20 reste amovible sans nécessiter un démontage de l'un ou l'autre des appareils électriques.

Un second mode de réalisation, illustré par les figures 4 et 5, comporte un fond 101 et des piliers 102 similaires à ceux décrits en référence aux figures 1 à 3.

Contrairement au premier mode de réalisation, les axes longitudinaux des montants 120 et des rails DIN 140 sont parallèles. De préférence chaque montant 120 et son rail associé 140 sont réalisés en une pièce monobloc en plastique comportant des éléments de montage 121 et 122 du type décrit en référence au premier mode de réalisation, qui viennent s'emboîter sur les piliers 102.

Des crochets 127 coulissants parallèlement au fond 101, selon l'axe longitudinal du rail 140, sont logés dans des glissières associées aux éléments de montage 121, 122. Chaque crochet 127 est réalisé en une pièce monobloc en plastique, intégrant un élément ressort, par exemple sous la forme d'une lame 128, qui sollicite le crochet 127 dans sa position de verrouillage sur le pilier 102 correspondant.

De manière optionnelle, deux ensembles montants 120 et rail 140 peuvent être assemblés par des traverses 110 perpendiculaires aux rails 140.

Ce second mode de réalisation présente les mêmes avantages que ceux décrits en référence au premier mode.

On comprendra aisément en outre qu'il est possible, sans sortie du cadre de l'invention, d'utiliser un crochet 127 en association avec le premier mode de réalisation et vice-versa un crochet 27 en association avec le second mode de réalisation.

## Revendications

1. Coffret pour appareillage électrique comprenant :
. un fond plan (1; 101), muni d'au moins deux piliers (2, 102) disposés en saillie par rapport au fond et dirigés perpendiculairement au fond vers l'intérieur du coffret,
. un montant (20; 120) fixé de manière amovible sur le fond, ledit montant comportant au moins deux éléments de montage (21, 22) adaptés pour coopérer respectivement avec lesdits deux piliers et,
. au moins un rail (40; 140) parallèle au fond, disposé sur le montant et destiné à recevoir l'appareillage électrique,
. un moyen de verrouillage rapide (6, 7, 8, 27; 127) entre chaque élément de montage et le pilier correspondant.
caractérisé en ce que ledit moyen de verrouillage rapide (6, 7, 8, 27; 127) comprend un crochet (27; 127) qui est monté de façon coulissante dans ledit élément de montage selon une direction parallèle au fond (1; 101) et qui est adapté pour venir s'enficher dans des logements correspondants (6, 7, 8) ménagés le long du pilier correspondant.

2. Coffret selon la revendication 1, caractérisé en ce que les éléments de montage (21, 22; 121, 122) comportent au moins un évidement (24) destiné à coulisser sur le pilier (2; 102) correspondant.

3. Coffret selon l'une quelconque des revendications précédentes, caractérisé en ce que ledit moyen de verrouillage rapide (6, 7, 8, 27; 127) permet d'établir un verrouillage de l'élément de montage sur le pilier (2; 102) correspondant selon une position réglable le long du pilier, afin que la distance entre ledit élément de montage et ledit fond (1; 101) soit réglable.

4. Coffret selon l'une quelconque des revendications 1 à 3, caractérisé en ce que chaque dit crochet (27; 127) est disposé entre le rail (40; 140) et le fond et en ce qu'il coulisse selon l'axe longitudinal du rail.

5. Coffret selon l'une quelconque des revendications 2 à 4, caractérisé en ce que le pilier (2; 102) et l'évidement (24) ménagé dans l'élément de montage correspondant ont sensiblement la forme d'un demi-cylindre.

6. Coffret selon l'une quelconque des revendications précédentes, caractérisé en ce que ledit fond (1; 101) et lesdits piliers (2; 102) forment un ensemble monobloc.

7. Coffret selon l'une quelconque des revendications précédentes, caractérisé en ce que ledit montant (20; 120) et ledit rail (40; 140) forment un ensemble monobloc.

8. Coffret selon l'une quelconque des revendications précédentes, caractérisé en ce que chacun desdits piliers (2) comporte plusieurs éléments sécables (2A, 2B, 2C) présentant chacun un logement (6, 7, 8) capable de coopérer avec un crochet bistable (27).

9. Coffret selon l'une quelconque des revendications précédentes, caractérisé en ce que le rail (40) dépasse de part et d'autre les éléments de montage (21, 22).

10. Coffret selon l'une quelconque des revendications 1 à 9, caractérisé en ce que l'axe longitudinal du montant (120) est parallèle à l'axe longitudinal du rail (140).

## Patentansprüche

1. Gehäuse für elektrische Schaltgeräte, das
- einen ebenen Boden (1; 101) mit mindestens zwei Stützen (2, 102), die aus dem Boden hervorstehen und senkrecht zum Boden in das Innere des Gehäuses ragen,
- eine abnehmbar auf dem Boden befestigte Trägerschiene (20; 120) mit mindestens zwei Montageelementen (21, 22), die dazu ausgelegt sind, mit den beiden genannten Stützen zusammenzuwirken,
- mindestens eine, parallel zum Boden verlaufende, auf der Trägerschiene angeordnete Geräteschiene (40, 140), die zur Aufnahme elektrischer Schaltgeräte dient, und
- ein Schnellverriegelungselement (6, 7, 8, 27; 127) zur Sicherung jedes Montageelements auf der zugehörigen Stütze umfaßt,
dadurch gekennzeichnet, daß das Schnellverriegelungselement (6, 7, 8, 27; 127) einen Haken (27; 127) umfaßt, der parallel zum Boden (1; 101), verschiebbar in das genannte Montageelemente eingesetzt und so ausgebildet ist, daß er in längs der zugehörigen Stütze ausgebildete, zugeordnete Aufnahmen (6, 7, 8) eingreifen kann.

2. Gehäuse nach Anspruch 1, dadurch gekennzeichnet, daß die Montageelemente (21, 22; 121, 122) mindestens eine Ausnehmung (24) aufweisen, die dazu dient, über die zugehörige Stütze (2; 102) geführt zu werden.

3. Gehäuse nach irgendeinem der vorhergehenden Ansprüche, dadurch gekennzeichnet, daß das genannte Schnellverriegelungselement (6, 7, 8; 27, 127) die Verriegelung des Montageelements auf der zugehörigen Stütze (2; 102) in einer, längs der Stütze verstellbaren Position erlaubt, so daß der Abstand zwischen dem genannten Montageelement und dem genannten Boden (1; 101) verstellt werden kann.

4. Gehäuse nach irgendeinem der Ansprüche 1 bis 3, dadurch gekennzeichnet, daß jeder genannte Haken (27; 127) zwischen der Geräteschiene (40; 140) und dem Boden angeordnet und entlang der Längsachse der Schiene verschoben werden kann.

5. Gehäuse nach irgendeinem der Ansprüche 2 bis 4, dadurch gekennzeichnet, daß die Stütze (2; 102) und die im zugehörigen Montageelement ausgebildete Ausnehmung (24) annähernd die Form eines Halbzylinders aufweisen.

6. Gehäuse nach irgendeinem der vorhergehenden Ansprüche, dadurch gekennzeichnet, daß der genannte Boden (1; 101) und die genannten Stützen (2; 102) eine einstückige Anordnung bilden.

7. Gehäuse nach irgendeinem der vorhergehenden Ansprüche, dadurch gekennzeichnet, daß die genannte Trägerschiene (20; 120) und die genannte Geräteschiene (40; 140) eine einstückige Anordnung bilden.

8. Gehäuse nach irgendeinem der vorhergehenden Ansprüche, dadurch gekennzeichnet, daß jede der genannten Stützen (2) mehrere ausbrechbare Elemente (2A, 2B, 2C) umfaßt, die jeweils eine Aufnahme (6, 7, 8) aufweisen, die mit einem bistabilen Haken (27) zusammenwirken kann.

9. Gehäuse nach irgendeinem der vorhergehenden Ansprüche, dadurch gekennzeichnet, daß die Geräteschiene (40) die Montageelemente (21, 22) zu beiden Seiten überragt.

10. Gehäuse nach irgendeinem der Ansprüche 1 bis 9, dadurch gekennzeichnet, daß die Längsachse der Trägerschiene (120) parallel zur Längsachse der Geräteschiene (140) verläuft.

## Claims

1. An enclosure for electrical switchgear comprising:
- a flat base (1; 101) equipped with at least two pillars (2, 102) arranged protruding out from the base and directed perpendicularly to the base towards the inside of the enclosure,
- an upright (20; 120) removably fixed on the base, said upright comprising at least two assembly elements (21, 22) designed to cooperate respectively with said two pillars and,
- at least one rail (40; 140) parallel to the base, arranged on the upright and designed to receive the electrical switchgear,
- a fast locking means (6, 7, 8, 27; 127) between each assembly element and the corresponding pillar,
characterized in that said fast locking means (6, 7, 8, 27; 127) comprises a latch (27; 127) which is mounted with sliding in said assembly element in a direction parallel to the base (1; 101) and which is designed to fit into corresponding housings (6, 7, 8) arranged along the corresponding pillar.

2. The enclosure according to claim 1, characterized in that the assembly elements (21, 22; 121, 122) comprise at least one recess (24) designed to slide on the corresponding pillar (2; 102).

3. The enclosure according to either one of the foregoing claims, characterized in that said fast locking means (6, 7, 8, 27; 127) enable locking of the assembly element to be established on the corresponding pillar (2; 102) in an adjustable position along the pillar, so that the distance between said assembly element and said base (1; 101) is adjustable.

4. The enclosure according to any one of the claims 1 to 3, characterized in that each said latch (27; 127) is arranged between the rail (40; 140) and the base and that it slides according to the longitudinal axis of the rail.

5. The enclosure according to any one of the claims 2 to 4, characterized in that the pillar (2; 102) and the recess (24) arranged in the corresponding assembly element have appreciably the shape of a half-cylinder.

6. The enclosure according to any one of the foregoing claims, characterized in that said base (1; 101) and said pillars (2; 102) form a monoblock assembly.

7. The enclosure according to any one of the foregoing claims, characterized in that said upright (20; 120) and said rail (40; 140) form a monoblock assembly.

8. The enclosure according to any one of the foregoing claims, characterized in that each of said pillars (2) comprises several sectile elements (2A, 2B, 2C) each presenting a housing (6, 7, 8) able to cooperate with a bistable latch (27).

9. The enclosure according to any one of the foregoing claims, characterized in that the rail (40) overshoots the assembly elements (21, 22) on both sides.

10. The enclosure according to one of the claims 1 to 9, characterized in that the longitudinal axis of the upright (120) is parallel to the longitudinal axis of the rail (140).
